# EUROPEAN PATENT APPLICATION

(11) **EP 3 094 139 A1**
(43) Date of publication of application: **16.11.2016**
(21) Application number: 16169708.1
(22) Date of filing: 13.05.2016
(51) Int. Cl.: H04W 52/02

(54) **LOW POWER DATA TRANSMISSION PROTOCOL**

(30) Priority: 13.05.2015 US 201514710906
(71) Applicant: Simmonds Precision Products, Inc., Vergennes, VT 05491 (US)
(72) Inventor: WIEMAN, Jonathan, Ferrisburgh, VT 05456 (US); RITTENHOUSE, Garret Edward, Burlington, VT 05408 (US)
(74) Representative: Hughes, Andrea Michelle

(57) **Abstract**

A data transmission system 10 and method includes a network coordinator 14 and a node 12a-12n. The node 12a-12n is configured to execute a schedule that may be a default schedule or may be a schedule received from the network coordinator 14. The schedule includes a wake period and a sleep period. The node 12a-12n is configured to passively listen for commands from the network coordinator 14 during the wake period, and to not listen for the commands from the network coordinator 14 during the sleep period.

## Description

### BACKGROUND

The present invention relates generally to data transmission, and in particular to a system and method for low power data transmission.

In a wired or wireless equipment network, an energy efficient synchronization mechanism is desirable to minimize node power consumption. Reduced power consumption is a critical factor in, for example, military and aerospace fields where size, weight, and increased length between maintenance cycles are considerations for fielded equipment. Also, in military and aerospace applications, it may be desirable, for example, to prevent wireless nodes from announcing the node's presence under certain circumstances, such as while in flight. Therefore, it is desirable to reduce the node's power consumption as much as possible.

### SUMMARY

A method of low power data transmission includes transmitting, by a network coordinator, a sleep/wake schedule that includes a sleep period and a wake period for a node; receiving, by the node, the first sleep/wake schedule; passively listening, by the node, for commands from the network coordinator during the wake period; and powering down, by the node, data communication capabilities of the node during the first sleep period.

A data transmission system includes a network coordinator and a node. The node is configured to receive a schedule from the controller. The schedule includes a wake period and a sleep period. The node is configured to passively listen for commands from the network coordinator during the wake period, and to not listen for the commands from the network coordinator during the sleep period.

A node includes a power source, a timer, and a controller. The controller receives a wake/sleep schedule from an external source and is configured to wake the node and listen for external commands while the node is in a wake state, and power down the node while the node is in a sleep state. The node remains in the wake state for a wake period and remains in the sleep state for a sleep period.

### BRIEF DESCRIPTION OF THE DRAWINGS

FIG. 1 is a block diagram illustrating a low power data transmission system.
FIGS. 2A and 2B are diagrams illustrating transmission protocols for nodes of a data transmission system.
FIG. 3 is a flowchart illustrating a method of providing low power data transmission between nodes and a network coordinator.

### DETAILED DESCRIPTION

A system and method is disclosed herein for providing low power data transmission. The system includes a plurality of nodes such as, for example, wireless sensors, and a base station that includes, for example, a network coordinator. Each node may receive a wake/sleep schedule from the network coordinator. The wake/sleep schedule includes a wake interval period, and a time out period. The wake interval period is the time between wake cycles for the node and the time out period is the amount of time the node remains awake prior to entering a new sleep cycle. During the wake cycle, the node passively listens for, and executes commands from, the network coordinator. By only listening for and executing commands during the wake cycle, the amount of power utilized by the node is greatly reduced. This is advantageous in systems, for example, such as fielded wireless sensors that run on battery power or power derived from an energy harvester.

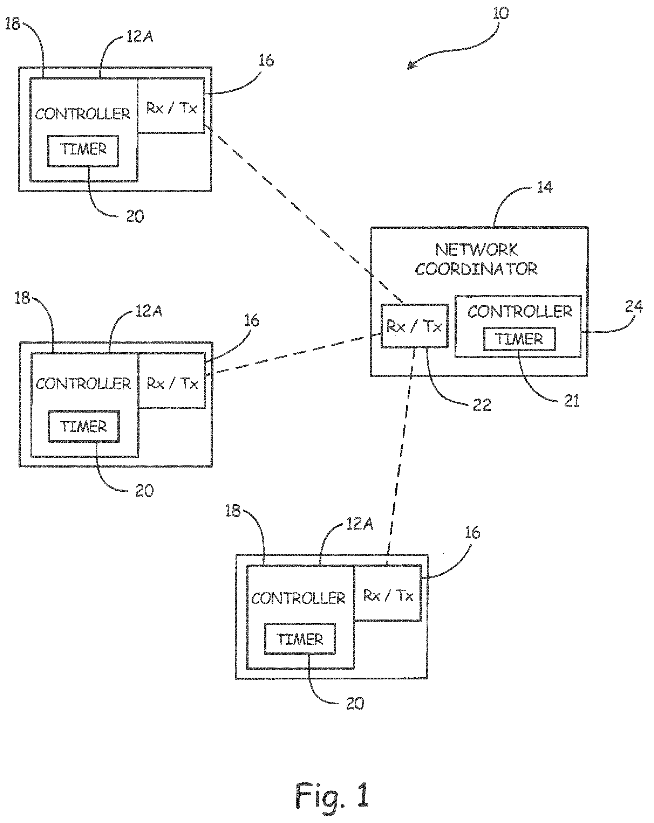

FIG. 1 is a block diagram illustrating data transmission system 10. System 10 includes nodes 12a-12n and base station/network coordinator 14. Each wireless node 12a-12n includes receiver/transmitter 16, controller 18, and timer 20. Network coordinator 14 includes timer 21, receiver/transmitter 22 and controller 24. Nodes 12a-12n are any devices capable of data transmission such as, for example, wired or wireless sensors and/or actuators. Network coordinator 14 may be implemented as a computer system configured to communicate with nodes 12a-12n over a network such as, for example, a wired or wireless local area network (LAN), wide area network (WAN), or any other communication network. Network data communication is illustrated with a dashed line in FIG. 1 and may represent either a wired or a wireless connection. Receiver/transmitters 16 and 22 may be any components capable of sending and receiving data transmissions on a communication network such as, for example, radio-frequency (RF) antennas, network adapters, or any other data transmission technology. Timers 20 and 21 may be implemented utilizing a real time clock, as a counter implemented in, for example, a register or non-volatile memory (NVM), or any other timing component. Although illustrated as separate components, controller 16, receiver/transmitter 18, and timer 20 may be implemented separately or as part of the same component. Network coordinator 14 may be in any location such as, for example, a ground station or an aircraft.

Network coordinator 14 may be configured to provide a wake/sleep schedule to nodes 12a-12n over, for example, the communication network. Wireless sensors, for example, receive and execute commands from network coordinator 14. These commands may be, for example, instructions to collect data, transmit data, or perform other functions of the wireless sensors. For many nodes 12a-12n, the node 12a-12n spends a majority of time in an idle mode, not receiving or executing commands from network coordinator 14. If the node 12a-12n remains fully powered during these idle times, power is unnecessarily consumed. By scheduling sleep cycles for each node 12a-12n, the amount of power utilized by each node 12a-12n is greatly reduced. This is beneficial, for example, for wireless sensors that run on battery power. This may also be useful in military scenarios, for example, in which wireless sensors must remain deployed in the field and increased time between maintenance cycles may be crucial. The wake/sleep schedules may be set, for example, automatically by an algorithm running on network controller 14, or manually by an operator through network coordinator 14. Nodes 12a-12n may store the wake/sleep schedule locally in, for example, a register, NVM, or other storage device.

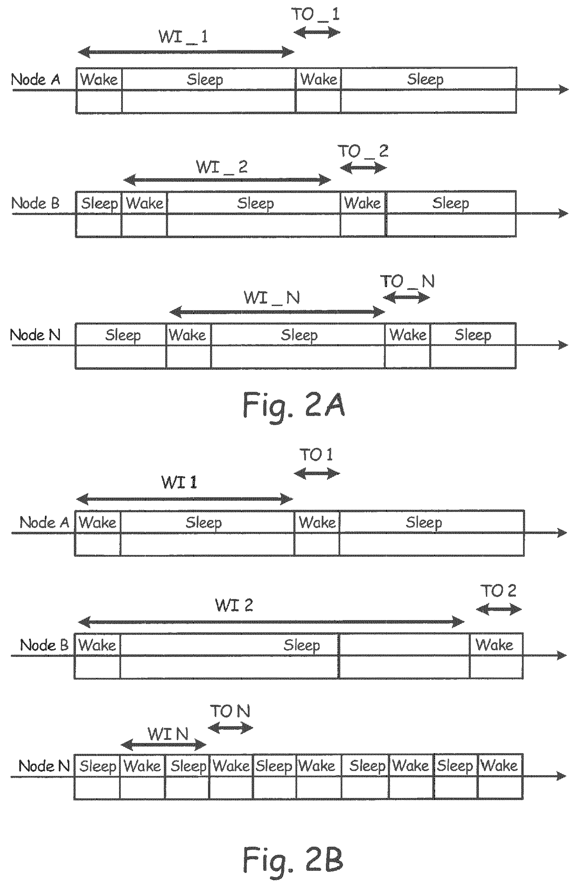

With continued reference to FIG. 1, FIGS. 2A and 2B are diagrams illustrating transmission protocols for nodes 12a-12n (labeled Node A, Node B, and Node N in FIGS. 2A and 2B) of data transmission system 10. FIG. 2A illustrates a transmission protocol for nodes 12a-12n that include staggered, equal wake interval periods. As illustrated in FIG. 2A, node 12a begins with a wake cycle. During the wake cycle, node 12a listens for commands from network coordinator 14. This listening may be passive in that node 12a does not command any data onto the communication network. This is possible because network coordinator 14 set the wake/sleep schedule for node 12a and thus knows when node 12a is awake. Because of this, network coordinator 14 can send commands to node 12a only when node 12a is awake.

Node 12a enters its sleep cycle upon completion of its timeout interval (TO_1) which may be tracked, for example, using timer 20 of node 12a. However, if node 12a is presently executing commands upon timer 20 reaching the end of the timeout interval (TO_1), node 12a may finish executing commands prior to entering the sleep cycle. Node 12a would then enter the sleep cycle following completion of the commands. The sleep cycle may include, for example, node 12a operating in a low power mode in which a majority of its systems, including its communication systems, are powered down. This saves power compared to prior systems in which, for example, the data transmission components remained powered on at all times to continuously listen for commands from network coordinator 14.

The wake interval period (WI_1) is a measure of time between wake cycles for node 12a. Timer 20, which may be the same timer also used to track the timeout period (TO_1), or may be a separate timer, measures the time elapsed since the start of the previous wake cycle. Upon reaching the WI_1 threshold, node 12a is woken up from its sleep cycle, powering on the necessary components to passively listen for commands from network coordinator 14. This may be implemented for all nodes 12a-12n as illustrated in FIG. 2A. The staggered implementation illustrated in FIG. 2A may be advantageous in systems, for example, for which all nodes 12a-12n are operating on similar hardware with similar power characteristics. By staggering the wake interval periods of each of nodes 12a-12n, network coordinator 14 may communicate, without interference, with each node 12a-12n at a separate, unique time, while the respective node 12a-12n is in its wake cycle.

FIG. 2B illustrates a transmission protocol for nodes 12a-12n that includes varying wake interval periods for each node 12a-12n. Nodes 12a-12n may be, for example, sensors that include technologies having variable sizes, implementations, and power requirements. For example, node 12b may require more power and more time to power up after a sleep cycle than node 12a. Therefore, it may be advantageous to extend the wake interval (WI_2) for node 12b in comparison to the wake interval (WI_1) of node 12a. While illustrated with substantially similar timeout periods (TO_1 - TO_N), timeout periods may be similarly adjusted between nodes 12a-12n to accommodate the specific power needs of each node 12a-12n. In the case of any wake/sleep schedule, network coordinator 14 sets the wake/sleep schedule of all nodes 12a-12n, ensuring that network coordinator 14 will only send commands to each node 12a-12n when the respective node is awake. Network coordinator 14 may store each wake/sleep schedule locally and track the schedules using, for example, timer 21 implemented as a real time clock or other timing component.

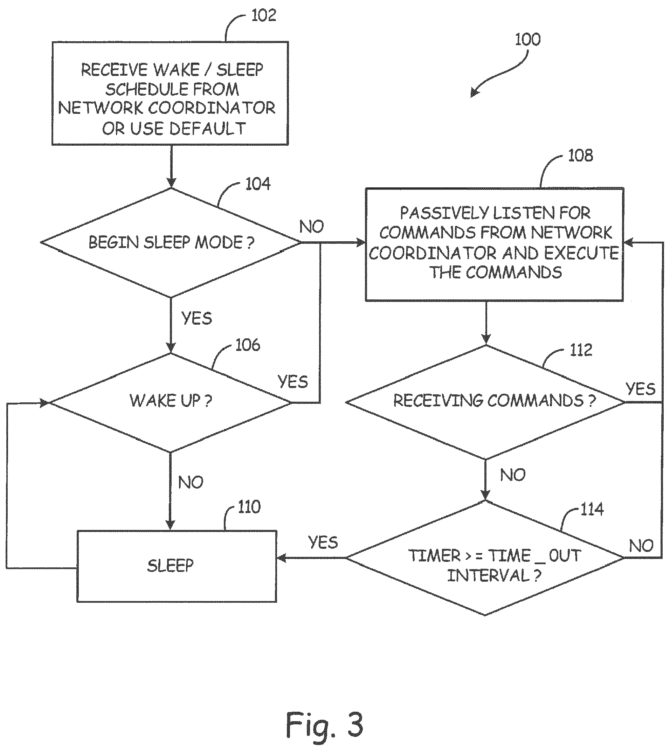

With continued reference to FIGS. 1, 2A and 2B, FIG. 3 is a flowchart illustrating method 100 of providing low power data transmission between nodes 12a-12n and a network coordinator 14. At step 102, network coordinator 14 provides wake/sleep schedules to each of nodes 12a-12n. This may be done upon initial setup of system 10, or at any other desirable time such as, for example, during maintenance of nodes 12a-12n. Alternatively, nodes 12a-12n may enter a default wake/sleep schedule. At step 102, it is determined if node 12a, for example, is to begin in a sleep state. If so, method 100 proceeds to step 106 in which node 12a is powered down and in a sleep cycle. If node 12a is not to begin in the sleep state, method 100 proceeds to step 108. A sleep state may comprise, for example, node 12a operating in a low power mode such that a majority of its hardware is shut down.

At step 106, it is determined if it is time for node 12a to wake up from its sleep cycle. This may be determined using timer 20 and the stored wake interval period for node 12a. Timer 20 may, for example, reset each time node 12a wakes up. Once timer 20 reaches the end of the wake interval period, node 12a is ready to once again wake up. If node 12a is ready to wake up, method 100 proceeds to step 108. If node 12a is not ready to wake up, method 100 proceeds to step 110. At step 110, node 12a is in the sleep state and method 100 returns to step 106 to determine if it is time for node 12a to wake up.

At step 108, node 12a is not in a sleep state. This may comprise node 12a having its data communication hardware powered on. Node 12a listens passively for commands from network coordinator 14. At step 112, if node 12a is receiving commands, method 100 returns to step 108 and node 12a executes those commands. If node 12a is not currently receiving commands from network coordinator 14, method 100 proceeds to step 114 and determines if the timeout interval period has ended. Timer 20, or a separate timer, may be utilized to determine if the timeout period has ended. For example, upon wakeup, timer 20 may be reset, or may have its present time noted. Upon reaching the end of the timeout interval period, if no commands are currently being received, method 100 proceeds to step 110 to enter the sleep state. If the timeout interval period has not ended, method 100 returns to step 108 and node 12a continues to listen for commands. Method 100 may run indefinitely until, for example, the system is shut down, or node 12a receives an updated wake/sleep schedule from network coordinator 14. While described with relation to node 12a, method 100 may be implemented for any/all nodes 12a-12n.

### Discussion of Possible Embodiments

The following are non-exclusive descriptions of possible embodiments of the present invention.

A method of low power data transmission includes transmitting, by a network coordinator, a sleep/wake schedule that includes a sleep period and a wake period for a node; receiving, by the node, the first sleep/wake schedule; passively listening, by the node, for commands from the network coordinator during the wake period; and powering down, by the node, data communication capabilities of the node during the first sleep period.

The method of the preceding paragraph can optionally include, additionally and/or alternatively, any one or more of the following features, configurations and/or additional components:

A further embodiment of the foregoing method, further including transmitting, by the network coordinator, a second sleep/wake schedule that includes a second sleep period and a second wake period for a second node; receiving, by the second node, the second sleep/wake schedule; passively listening, by the second node, for commands from the network coordinator during the second wake period; and powering down, by the second node, data transmission capabilities of the second node during the second sleep period.

A further embodiment of any of the foregoing methods, wherein the first and second sleep periods are equal.

A further embodiment of any of the foregoing methods, wherein the first and second sleep periods are not equal.

A further embodiment of any of the foregoing methods, wherein the first wake period is defined by a timeout interval, and wherein the first sleep period is defined by the timeout interval subtracted from a wake interval, and wherein the first sleep/wake schedule includes the timeout interval and the wake interval.

A further embodiment of any of the foregoing methods, wherein passively listening, by the first node, for commands from the network coordinator during the first wake period includes counting, by a timer, a first time period count during the first wake period; and passively listening, by the first node, for commands from the network coordinator until the first time period count is greater than or equal to a count corresponding to the timeout interval.

A further embodiment of any of the foregoing methods, wherein powering down, by the first node, the data communication capabilities of the first node during the first sleep period includes counting, by the timer, a second time period count during the first wake period and the first sleep period; powering down, by the first node the data communication capabilities of the first node while the second time period count is greater than the count corresponding to the first timeout interval and less than a count corresponding to the wake interval; and power up, by the first node, the data communication capabilities of the first node when the second time period count is equal to the count corresponding to the wake interval.

A data transmission system includes a network coordinator and a node. The node is configured to receive a schedule from the controller. The schedule includes a wake period and a sleep period. The node is configured to passively listen for commands from the network coordinator during the wake period, and to not listen for the commands from the network coordinator during the sleep period.

The data transmission system of the preceding paragraph can optionally include, additionally and/or alternatively, any one or more of the following features, configurations and/or additional components:

A further embodiment of the foregoing system, wherein the first schedule is a default schedule.

A further embodiment of any of the foregoing systems, wherein the first schedule is received by the first node from the network coordinator.

A further embodiment of any of the foregoing systems, further including a second node configured receive a second schedule from the controller, wherein the second schedule includes a second wake period and a second sleep period, and wherein second node is configured to passively listen for commands from the network coordinator during the second wake period, and wherein the second node is configured to not listen for the commands from the network coordinator during the second sleep period.

A further embodiment of any of the foregoing systems, wherein the first sleep period and the second sleep period are equal.

A further embodiment of any of the foregoing systems, wherein the first sleep period and the second sleep period are not equal.

A further embodiment of any of the foregoing systems, wherein the first and second nodes are battery or energy harvester powered wireless sensors.

A further embodiment of any of the foregoing systems, wherein the first wake period is defined by a timeout interval, and wherein the first sleep period is defined by the timeout interval subtracted from a wake interval, and wherein the sleep/wake schedule includes the timeout interval and the wake interval.

A node includes a power source, a timer, and a controller. The controller receives a wake/sleep schedule from an external source and is configured to wake the node and listen for external commands while the node is in a wake state, and power down the node while the node is in a sleep state. The node remains in the wake state for a wake period and remains in the sleep state for a sleep period.

The node of the preceding paragraph can optionally include, additionally and/or alternatively, any one or more of the following features, configurations and/or additional components:

A further embodiment of the foregoing node, wherein the sleep period is greater than the wake period.

A further embodiment of any of the foregoing nodes, wherein the power source is a battery or energy harvester.

A further embodiment of any of the foregoing nodes, wherein the wake/sleep schedule is received from an external network controller.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of low power data transmission, the method comprising:
transmitting, by a network coordinator, a first sleep/wake schedule that includes a first wake period and a first sleep period for a first node (12a);
receiving, by the first node, the first sleep/wake schedule;
passively listening, by the first node (12a), for commands from the network coordinator during the first wake period; and
powering down, by the first node (12a), data communication capabilities of the first node during the first sleep period.

2. The method of claim 1, further comprising:
transmitting, by the network coordinator, a second sleep/wake schedule that includes a second sleep period and a second wake period for a second node (12b);
receiving, by the second node (12b), the second sleep/wake schedule;
passively listening, by the second node (12b), for commands from the network coordinator during the second wake period; and
powering down, by the second node, data transmission capabilities of the second node during the second sleep period.

3. The method of claims 1 or 2, wherein the first wake period is defined by a timeout interval, and wherein the first sleep period is defined by the timeout interval subtracted from a wake interval, and wherein the first sleep/wake schedule includes the timeout interval and the wake interval.

4. The method of claim 3, wherein passively listening, by the first node (12a), for commands from the network coordinator during the first wake period comprises:
counting, by a timer, a first time period count during the first wake period; and
passively listening, by the first node (12a), for commands from the network coordinator until the first time period count is greater than or equal to a count corresponding to the timeout interval.

5. The method of claim 4, wherein powering down, by the first node (12a), the data communication capabilities of the first node during the first sleep period comprises:
counting, by the timer, a second time period count during the first wake period and the first sleep period;
powering down, by the first node (12a) the data communication capabilities of the first node while the second time period count is greater than the count corresponding to the first timeout interval and less than a count corresponding to the wake interval; and
power up, by the first node (12a), the data communication capabilities of the first node when the second time period count is equal to the count corresponding to the wake interval.

6. A data transmission system (10) comprising:
a network coordinator (14);
a first node (12a) configured to execute a first schedule from the controller, wherein the first schedule includes a first wake period and a first sleep period, and wherein first node (12a) is configured to passively listen for commands from the network coordinator during the first wake period, and wherein the first node (12a) is configured to not listen for the commands from the network coordinator during the first sleep period.

7. The data transmission system of claim 6, wherein the first schedule is a default schedule.

8. The data transmission system of claims 6 or 7, wherein the first schedule is received by the first node (12a) from the network coordinator.

9. The system of any of claims 6-8, further comprising:
a second node (12b) configured receive a second schedule from the controller, wherein the second schedule includes a second wake period and a second sleep period, and wherein second node (12b) is configured to passively listen for commands from the network coordinator during the second wake period, and wherein the second node (12b) is configured to not listen for the commands from the network coordinator during the second sleep period.

10. The system of claim 9, wherein the first and second nodes (12a, 12b) are battery or energy harvester powered wireless sensors.

11. The system of any of claims 6-10, wherein the first wake period is defined by a timeout interval, and wherein the first sleep period is defined by the timeout interval subtracted from a wake interval, and wherein the sleep/wake schedule includes the timeout interval and the wake interval.

12. The system of claim 11, wherein the first node (12a) further comprises a timer (20), and wherein the timer (20) is configured to count a first time period count and a second time period count, and wherein the first node (12a) continues to listen for the commands from the network coordinator until the first time period count is greater than or equal to a count corresponding to the timeout interval, and wherein the first node (12a) continues to not listen for the commands from the network coordinator while the second time period count is greater than the count corresponding to the timeout interval and less than a count corresponding to the wake interval.

13. A wireless node (12a-12n) comprising:
a power source;
a timer (20); and
a controller (18) configured to execute a wake/sleep schedule, and configured to wake up the wireless node and listen for external commands while the wireless node is in a wake state, and configured to power down the wireless node while the wireless node is in a sleep state, wherein the wireless node remains in the wake state for a wake period and remains in the sleep state for a sleep period.

14. The wireless node of claim 13, wherein the sleep period is greater than the wake period.

15. The wireless node of any of claims 13-14, wherein the wake/sleep schedule is received from an external network controller.
